# EUROPEAN PATENT APPLICATION

(11) **EP 1 645 188 A1**
(43) Date of publication of application: **12.04.2006**
(21) Application number: 05021288.5
(22) Date of filing: 29.09.2005
(51) Int. Cl.: A01N 59/20, A01N 25/34, A01M 25/00, C02F 1/50, A01P 7/04

(54) **Device against the development of larvae in water**

(30) Priority: 01.10.2004 IT bo20040609
(71) Applicant: Placucci, Alessandro, 47120 Longiano (IT)
(72) Inventor: Placucci, Alessandro, 47120 Longiano (IT)
(74) Representative: Negrini, Elena

(57) **Abstract**

A device against the development of larvae in water comprises metallic copper destined to be absorbed in the water to prevent the development of larvae or other insect growth stage.

## Description

The present invention refers to fight against the harmful insects and to a device against the development of larvae in water and particularly for preventing development and take off of mosquitoes and other insects.

The pesticide use is known to be poured in the stagnant water of vases and containers to prevent the opening of the mosquito eggs and/or the development of the larvae into adult insects.

A disadvantage of such known pesticides, is that, in case of rain or water flow, they are removed and subjected to degradation invaliding or reducing the effectiveness.

A further disadvantage of the known means consists in that, because of level and volume variations of the water to be treated, it is difficult or impossible to correctly dose the pesticides which therefore become ineffective or harmfully concentrated.

Another disadvantage of some of such pesticides consists in that they are harmful for the natural environment.

A further disadvantage consists in that said known means can be dangerous for children, which could be poisoned by their manipulation, and for the animals that could drink the water treated with such means.

A purpose of the present invention is to propose a device against the development of larvac in water fit for acting for a very prolonged period and not washable away.

Other purpose is to propose a device for inhibiting the development of larvae in water nearly in each environment condition.

A further purpose is to propose a device fit for dosing its own effect in function of the water level.

Other purpose is to propose a simple, effective and not polluting device.

The characteristics of the invention are underlined in the following with particular reference to the annexed drawings in which:
- figure 1 shows a schematic view in elevation and partially sectioned of the device object of the present invention;
- figure 2 shows an axonometric view of a variation of the device of figure 1;
- figure 3 shows an assembly of the devices of figure 1 before their separation;
- figure 4 shows a sectioned schematic view of a further variation of the device of figure 1 in association with a concavity consisting in a well:

- figure 5 shows a sectioned schematic view of a variant of the device of figure 1 in association with a concavity constituted by a manhole or well.

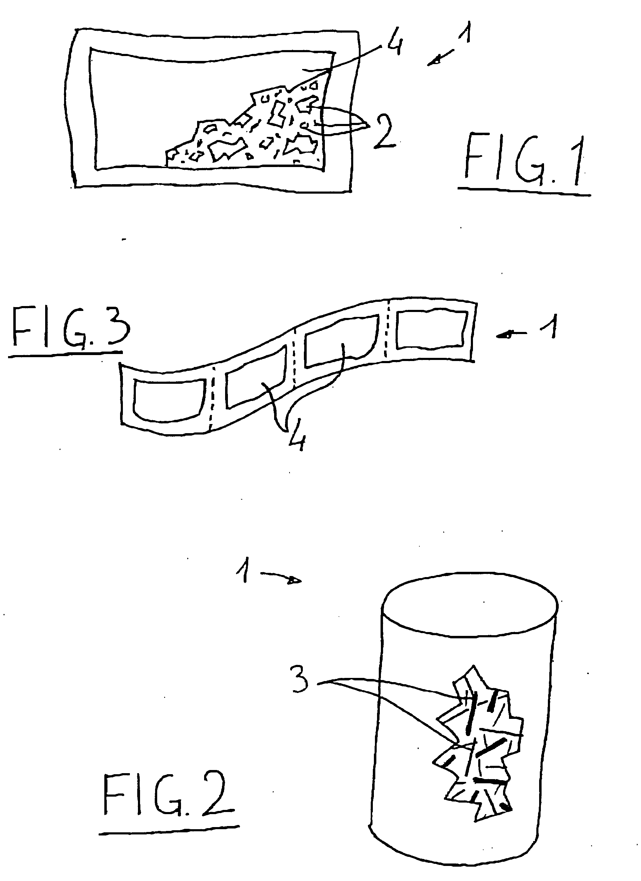

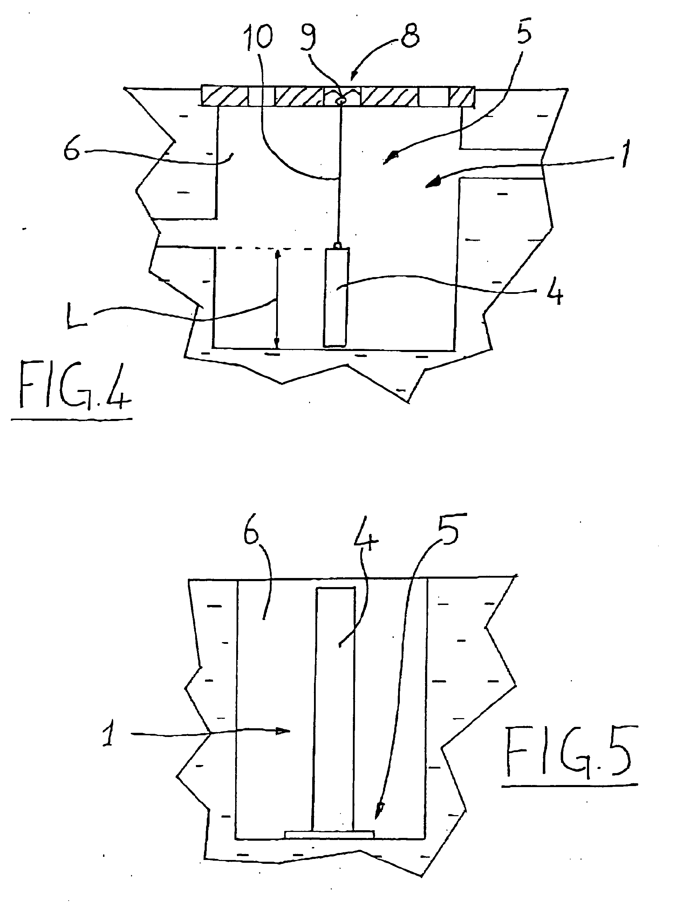

With reference to the figures 1 and 3, numeral 1 indicates the device against the development of larvae in water, object of the present invention, in which the active substance mainly includes metallic copper fit to be immersed into water for preventing the development of larvae or other insect growth stage, particularly for preventing the maturation and the take off of mosquitoes.

The invention provides that the copper is in form of dust, plates, ribbons, films, sintered pellets or, as illustrated in figure 1, in form of fragments 2 obtained, as an example, by grinding electric cables to be recycled. Such process, which represents one of the phases for the separation of the insulator from the copper cables, produces fragments 2 having different shapes and dimensions characterized by various relationships between their surface area and their volume.

Therefore it is possible to select different copper shapes each constituted by fragments and approximately having the same relationship surface/volume and therefore the same time of dissolution in water.

The invention provides the use of copper in two or more shapes, each of them constituted by fragments having a predefined ratio between area and volume, in order to obtain a prolongation of the effectiveness of the device thanks to the different dissolution mean time of the various copper shapes.

When the copper shapes are obtained from electric cables, the invention provides that the device can, optionally, include at least a part of the insulating plastic material fragments of the insulating material in order to reduce the number of the production phases and to interpose such plastic fragments between the copper fragments spacing them and increasing their effectiveness.

The provided copper shapes arc dosed in order to be efficacious in a predetermined water quantity and are packaged in containers 4 made of material highly water permeable, for instance plastic haimet or synthetic TNT, having little envelope shape. The containers are provided to be positioned at points of water collection, such as saucers, cisterns, small wells and similar, in such number to be effective in such water volume.

In alternative, the invention provides that the containers are made of material water soluble or frangible or that can be open in order to pour into water only the same container content s and that can approximately be shaped as discoid, plain, toroidal, spherical, geometric solid, filter shaped such as those filters for the preparation of drinks or similar in order to fit to various forms of elements for the water collection such as, for instance, the toroidal volume comprised between the vase and the saucer.

To allow or increase the copper oxide formation in free or poor of oxygen waters or in order to strengthen the initial effect of the device, the invention provides that the containers 4 include optionally also substances able to release oxygen e/o to favour the copper oxidation.

In observing the copper behavior in sweet water, particularly in the saucers, it is verified that the addition of substances designed to favour the solution in the water of calcium carbonate and limestone, at least under some observed conditions, increase the device effectiveness. Therefore the invention provides that the device optionally includes a material able to increase the solubility in water of carbonate and/or limestone, for instance containing phosphates, polyphosphate, sodium silicate or their mixtures.

The device operation provides that in a water collection point are positioned so many containers necessary to the water volume. Such operation is facilitated by the disposition illustrated in figure 3 in which the containers, each having the number of water liters for which the device is effective, are united to form a line and are easily separable one from the others.

In the variant of figure 2 the container 4 is tubular close shaped in permeable material and contains copper in filiform elements 2 obtained by electric cables to be recycled. The filiform elements are of two or more forms each having a corresponding diameter and therefore a corresponding dissolution time.

In the variant of figure 4 the container 4 is permeable and water resistant, has a lengthened form having a predetermined length and one of its end having a support mean 5 for the positioning of the same container in a concavity 6, for instance a manhole or a well, containing the water to be treated.

Such support mean 5 consist in a suspension mean 8 to hang nearly vertically the container 4, as an example, hooking to a grating or drain cover of the concavity 6.

The suspension mean 8 includes a hooking mean 9, for instance spring or hook shaped, connected to the container through a string mean 10 having a fixed or adjustable length. The length of the container 4 correspond approximately at the maximum water level L in the concavity 6 and the area of the transversal section of the container 4 is proportional to the area of the transversal section of the concavity portion 6 occupied by the water.

In such way the ratio between the copper surface exposed to the water and the water volume is nearly constant apart from the water level and therefore apart from the filling of the concavity. The variant of figure 4 advantageously allows to maintain for a long time the device effectiveness apart from the filling and without material wastes. Such variant also provides the advantage to allow a fast precise installation of the device in the manholes through the holes of the respective gratings without opening the same manholes.

The variant of figure 5 differs from that of figure 4 for the support mean 5 consisting in a support base 7 on the concavity 6 bottom for positioning nearly vertical of the container 4.

An advantage of the present invention is to propose a device against the development of larvae in water fit for fulfill its action for a very prolonged period and fil to inhibit the development of larvac in water nearly in every environment condition.

A further advantage is to furnish a device able to dose its own effect depending on the water level and simple, effective and not polluting.

## Claims

1. Device against the development of larvae in water **characterized in that** comprises metallic copper destined to be immerged into water for thwarting or preventing the development of larvae or other insect growth stage.

2. Device according to claim 1 **characterized in that** the copper is in form at least one among dust, plate, film, pellets, sintered pellets, fragments (2) and/or filiform elements (3).

3. Device according to claim 2 **characterized in that** the filiform elements (2) and/or the fragments (3) are obtained by electric cables.

4. Device according to claim 1 **characterized in that** the copper is packaged in containers (4) that can be opened and are frangible, water soluble or water permeable.

5. Device according to claim 4 **characterized in that** the containers (4) contain a copper amount for the treatment of a predetermined water amount.

6. Device according to claim 4 **characterized in that** the containers (4) have forms, approximately, lengthened, discoid, plain, toroidal, spherical, geometric solid, little envelope or filter shaped as those for the preparation of drinks.

7. Device according to claim 2 **characterized in that** the copper has at least two forms, each of them having a predefined ratio between the surface area and volume in order to obtain at least two different times of middle dissolution of the copper.

8. Device according to the claims 2 and 7 **characterized in that** the at least two forms consist in filiform elements (3) having at least two diameters.

9. Device according to claim 1 **characterized in that** comprises an oxidant material active in watery environment.

10. Device according to claim 1 **characterized in that** comprises a material able to increase the solubility in water of carbonate and/or active limestone in watery environment.

11. Device according to claim 4 **characterized in that** the container (4) is permeable and water resistant, has a lengthened form having a predetermined length and one of its end has a support mean (5) for the positioning of the same container in a concavity (6) containing the water to be treated.

12. Device according to claim 11 **characterized in that** the support mean (5) consists in a support base (7) on the bottom of the concavity (6) for the nearly vertical positioning of the container (4).

13. Device according to claim 11 **characterized in that** the support mean (5) consists in a suspension mean (8) to hang nearly vertically the container (4) in the concavity (6).

14. Device according to claim 13 **characterized in that** the suspension mean (8) comprises an hooking mean (9) connected to the container by means of a string mean (10) having fixed or adjustable length.

15. Device according to anyone of claims from 11 to 14 **characterized in that** the suspension mean (8) comprises an hooking mean (9) connected to the container by a string mean (10) having fixed or adjustable length.

16. Device according to anyone of claims from 11 to 15 **characterized in that** the length of the container (4) corresponds approximately at the maximum level of the water in the concavity (6).

17. Device according to anyone of claims from 11 to 16 **characterized in that** the area of the transversal section of the container (4) is proportional to the area of the transversal section of the portion of the concavity (6) occupied by the water.
